# EUROPEAN PATENT SPECIFICATION

(11) **EP 4 461 124 B1**
(45) Date of publication and mention of the grant of the patent: **21.01.2026**
(21) Application number: 24172308.9
(22) Date of filing: 25.04.2024
(51) Int. Cl.: A01D 90/04, A01F 15/10

(54) **PRE-CUTTER ASSEMBLY FOR A BALER IMPLEMENT**
VORSCHNEIDERANORDNUNG FÜR EIN BALLENPRESSENGERÄT
ENSEMBLE PRÉ-COUPEUR POUR UN OUTIL DE PRESSE À BALLES

(30) Priority: 01.05.2023 US 202318309922
(43) Date of publication of application: 13.11.2024
(73) Proprietor: Deere & Company, Moline, IL 61265 (US)
(72) Inventor: JADHAO, Umesh B, 68163 Mannheim (DE); VADNERE, Mohan A, 68163 Mannheim (DE)
(74) Representative: Stein, Stefan

(56) References cited:
- EP-B1- 3 053 430
- EP-B1- 3 275 303
- WO-A1-01/56363
- US-A1- 2005 072 135
- US-A1- 2021 267 129
- US-B2- 10 588 267

## Description

### TECHNICAL FIELD

The disclosure generally relates to a pre-cutter assembly for a baler implement.

### BACKGROUND

A baler implement gathers cut crop material from a ground surface of a field, and then forms the crop material into a bale. The baler implement includes a bale forming system for forming the crop material into the bale. The bale forming system may be configured to form the bale into a parallelepiped shape, or a cylindrical shape. Generally, the bale forming system includes a baling chamber, which may alternatively be referred to as a compression chamber, within which the crop material is compressed into the desired shape of the bale.

The baler implement includes a pick-up mechanism. The pick-up mechanism is disposed proximate the forward end of the baler implement. The pick-up mechanism gathers crop material from the ground surface and directs the gathered crop material toward and into an inlet of the baling chamber of the baler implement. The pickup may include, but is not limited to tines, forks, augers, conveyors, baffles, etc., for gathering and moving the crop material.

The baler implement may be equipped with a pre-cutter assembly, which is disposed between the pickup and the inlet of the baling chamber. As such, the pre-cutter assembly is disposed downstream of the pickup and upstream of the inlet relative to a direction of movement of the crop material. The pre-cutter cuts or chops the crop material into smaller pieces or segments prior to the crop material entering the baling chamber.

The plurality of knives may be selected in sets or groups to define a desired cutting width between adjacent knives. For example, a first set of the plurality of knives or a second set of the plurality of knives may be individually selected and deployed to achieve a first cutting width between adjacent knives. Both the first set and the second set of the plurality of knives may be selected and deployed to achieve a second cutting width between adjacent knives. The different sets of knives, or combinations thereof, may be selected based on crop type, crop density, crop moisture, etc., to provide the desired cutting based on the properties of the crop material. Typically, an operator of the baler implement must decide when and how many of the knives to use, and to manually control actuation of the knives to achieve the desired setting. US 10 588 267 B2 and EP 3 053 430 A1 disclose a large square baler with a pre-cutter assembly.

### SUMMARY

A pre-cutter assembly for a baler implement is provided. The pre-cutter assembly includes a support structure. A plurality of knives is coupled to the support structure. The plurality of knives includes a first set of knives and a second set of knives. The first set of knives and the second set of knives are each moveable independent of each other relative to the support structure between a retracted position and a deployed position. A first actuator is coupled to the first set of knives. The first actuator is operable to move the first set of knives between its respective retracted position and its respective deployed position. A second actuator is coupled to the second set of knives. The second actuator is operable to move the second set of knives between its respective retracted position and its respective deployed position. A controller is operatively coupled to the first actuator and the second actuator. The controller includes a processor and a memory having a knife control algorithm stored therein. The processor is operable execute the knife control algorithm to determine a current baler operating parameter and determine a status of the first set of knives and a status of the second set of knives. The controller then defines a desired positional setting for the first set of knives. The desired positional setting for the first set of knives includes one of the retracted position of the first set of knives and the deployed position of the first set of knives, The controller defines the desired positional setting for the first set of knives based on the current baler operating parameter, the status of the first set of knives, and the status of the second set of knives. The controller further defines a desired positional setting for the second set of knives. The desired positional setting for the second set of knives include one of the retracted position of the second set of knives and the deployed position of the second set of knives. The controller defines the desired positional setting for the second set of knives based on the current baler operating parameter, the status of the first set of knives, and the status of the second set of knives. The controller then communicates a control signal to the first actuator and the second actuator to control the first actuator to position the first set of knives in the desired position setting for the first set of knives and to control the second actuator to position the second set of knives in the desired position setting for the second set of knives.

In one aspect of the disclosure, the processor may be operable to execute the knife control algorithm to determine the current baler operating parameter by determining one of: a current crop type, a current crop flow rate, a desired bale density, and a current bale density. In one aspect of the disclosure, in order for the controller to determine the current baler operating parameter, the processor may be operable to execute the knife control algorithm to receive data related to at least one of a current weight of a bale, a current size of a bale, a current crop type of a bale, and a desired density of the bale. The controller may receive this data from a baler controller, one or more sensors on the baler, an associated work vehicle, etc.

According to the invention, the processor is operable to execute the knife control algorithm to determine the status of the first set of knives by tracking a cumulative usage of the first set of knives over time. Similarly, the controller determines the status of the second set of knives by tracking a cumulative usage of the second set of knives over a period of time. The processor may be operable to execute the knife control algorithm to define the desired positional setting for the first set of knives and the desired positional setting for the second set of knives based on which one of the cumulative usage of the first set of knives and the cumulative usage of the second set of knives is less. For example, the controller may select the one of the first set of knives and the second set of knives with the least cumulative usage to use so that the wear between the first set of knives and the second set of knives remains generally constant between the two.

In one aspect of the disclosure, the processor may be operable to execute the knife control algorithm to determine the status of the first set of knives by determining a current sharpness of the first set of knives. Similarly, the controller may determine the status of the second set of knives by determining a current sharpness of the second set of knives. The controller may then define the desired positional setting for the first set of knives and the desired positional setting for the second set of knives based on which one of the current sharpness of the first set of knives and the current sharpness of the second set of knives is greater, i.e., which set of knives is sharper. For example, the controller may select the one of the first set of knives and the second set of knives with the sharpest knives to use so that the relative sharpness between the first set of knives and the second set of knives remains generally constant between the two.

In one aspect of the disclosure, the processor may be operable to execute the knife control algorithm to communicate a status signal to a user interface to communicate the status of the first set of knives and the status of the second set of knives. The status may include, for example, a cumulative usage of the first set of knives and the second set of knives, a sharpness of the first set of knives and the second set of knives, or some other characteristic related to the status of the plurality of knives.

In one aspect of the disclosure, The pre-cutter assembly may include a position sensor disposed in communication with the controller and positioned to sense data related to a current position of the first set of knives and a current position of the second set of knives. The processor may be operable to execute the knife control algorithm to determine the status of the first set of knives by determining a current position of the first set of knives to be one of the retracted position of the first set of knives or the deployed position of the first set of knives. Similarly, the controller may determine the status of the second set of knives by determining a current position of the second set of knives to be one of the retracted position of the second set of knives or the deployed position of the second set of knives. The controller may then communicate a position signal to a user interface to communicate the current position of the first set of knives and the current position of the second set of knives.

In one aspect of the disclosure, each respective knife of the pre-cutter assembly may include a respective overload protection system allowing the respective knife to move from the deployed position into the retracted position in response to an applied force greater than a defined limit. In one aspect of the disclosure, the processor may be operable to execute the knife control algorithm to detect actuation of an overload protection system of one of the first set of knives and the second set of knives. The controller may then automatically re-set one of the first set of knives and the second set of knives in response to actuation of the overload protection system.

In one aspect of the disclosure, a baler implement comprising a pre-cutter assembly according to at least one of the claims 1 to 12 The pre-cutter assembly may be mounted to the baler implement. The baler implement may include, but is not limited to, a frame having a ground engagement device coupled thereto for traversing across a ground surface, and a bale formation system attached to the frame and including a compression chamber operable to form crop material into a bale. The compression chamber includes an inlet for receiving the crop material therethrough. The baler implement may further include a pick-up attached to the frame and positioned forward of the bale formation system relative to a direction of travel during operation and operable to gather the crop material and convey the crop material through the inlet and into the compression chamber. The pre-cutter assembly is attached to the frame and positioned between the pick-up and the inlet of the compression chamber. The pre-cutter assembly is may operable to cut the crop material into segments prior to passing through the inlet into the compression chamber.

In an embodiment, the pre-cutter assembly may include: a support structure attached to the frame; a plurality of knives including a first set of knives and a second set of knives, wherein the first set of knives and the second set of knives are each moveable independent of each other relative to the support structure between a retracted position and a deployed position; a first actuator coupled to the first set of knives and operable to move the first set of knives between its respective retracted position and its respective deployed position; a second actuator coupled to the second set of knives and operable to move the second set of knives between its respective retracted position and its respective deployed position; a controller operatively coupled to the first actuator and the second actuator. The controller includes a processor and a memory having a knife control algorithm stored therein, wherein the processor is operable execute the knife control algorithm to: determine a current baler operating parameter; determine a status of the first set of knives and a status of the second set of knives; define a desired positional setting for the first set of knives to include one of the retracted position of the first set of knives and the deployed position of the first set of knives, based on the current baler operating parameter, the status of the first set of knives, and the status of the second set of knives; define a desired positional setting for the second set of knives to include one of the retracted position of the second set of knives and the deployed position of the second set of knives, based on the current baler operating parameter, the status of the first set of knives, and the status of the second set of knives; and communicate a control signal to the first actuator and the second actuator to control the first actuator to position the first set of knives in the desired position setting for the first set of knives and to control the second actuator to position the second set of knives in the desired position setting for the second set of knives.

In a further embodiment, the processor is operable execute the knife control algorithm to determine the current baler operating parameter by determining one of: a current crop type, a current crop flow rate, a desired bale density, a current bale density and actuation of an overload protection system. In yet another embodiment, the processor is operable to execute the knife control algorithm to determine the status of the first set of knives by tracking a cumulative usage of the first set of knives over time, and to determine the status of the second set of knives by tracking a cumulative usage of the second set of knives over a period of time, and wherein the processor is operable to execute the knife control algorithm to define the desired positional setting for the first set of knives and the desired positional setting for the second set of knives based on which one of the cumulative usage of the first set of knives and the cumulative usage of the second set of knives is less. In yet another embodiment, the processor is operable to execute the knife control algorithm to determine the status of the first set of knives by determining a current sharpness of the first set of knives, and to determine the status of the second set of knives by determining a current sharpness of the second set of knives, and wherein the processor is operable to execute the knife control algorithm to define the desired positional setting for the first set of knives and the desired positional setting for the second set of knives based on which one of the current sharpness of the first set of knives and the current sharpness of the second set of knives is greater. In yet another embodiment, the processor is operable to execute the knife control algorithm to communicate a signal to a user interface to communicate the status of the first set of knives and the status of the second set of knives.

Accordingly, the pre-cutter assembly described herein may automatically determine which of the first set of knives and the second set of knives to deploy for the current operating parameters of the baler implement, and then automatically control the first actuator and the second actuator to achieve the desired knife deployment. In so doing, the controller may control the use of the first set of knives and the second set of knives to maintain each in substantially the same condition, e.g., the same level of sharpness and/or with the same amount of usage. Additionally, when the overload protection system for one of the knives is triggered, the controller may automatically re-set the knives into the desired setting. The pre-cutter assembly described herein enable automated and/or autonomous operation of the knives of the pre-cutter assembly, thereby reducing the workload of the operator.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a baler implement and associated traction unit.
FIG. 2 is a schematic side view of the baler implement.
FIG. 3 is a schematic perspective view of a pre-cutter assembly showing both a first set of knives and a second set of knives in respective deployed positions.
FIG. 4 is a schematic cross-sectional view of the pre-cutter assembly showing one of the plurality of knives in the deployed position.
FIG. 5 is a schematic cross-sectional view of the pre-cutter assembly showing one of the plurality of knives in a retracted position.
FIG. 6 is a schematic perspective view of the pre-cutter assembly showing the first set of knives in their respective deployed position and the second set of knives in their respective retracted position.
FIG. 7 is a schematic perspective view of the pre-cutter assembly showing the second set of knives in their respective deployed position and the first set of knives in their respective retracted position.
Fig. 8 is a schematic perspective view of the pre-cutter assembly showing a first actuator and a second actuator.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

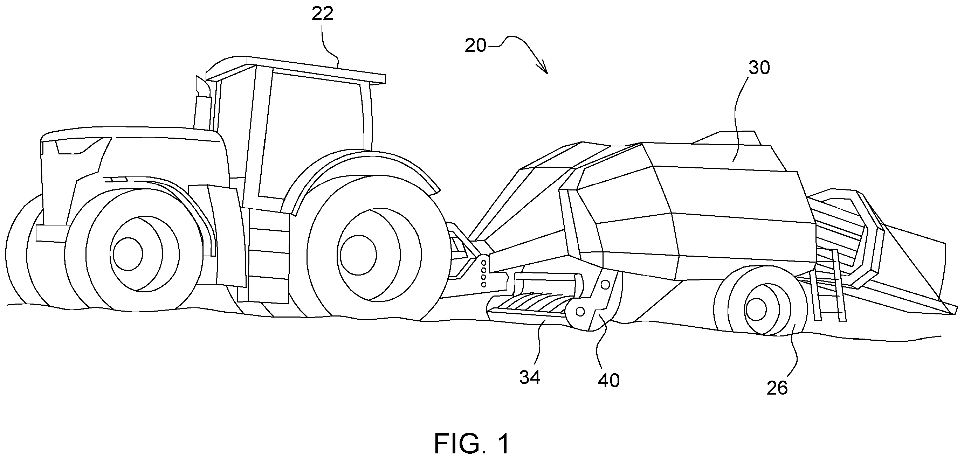

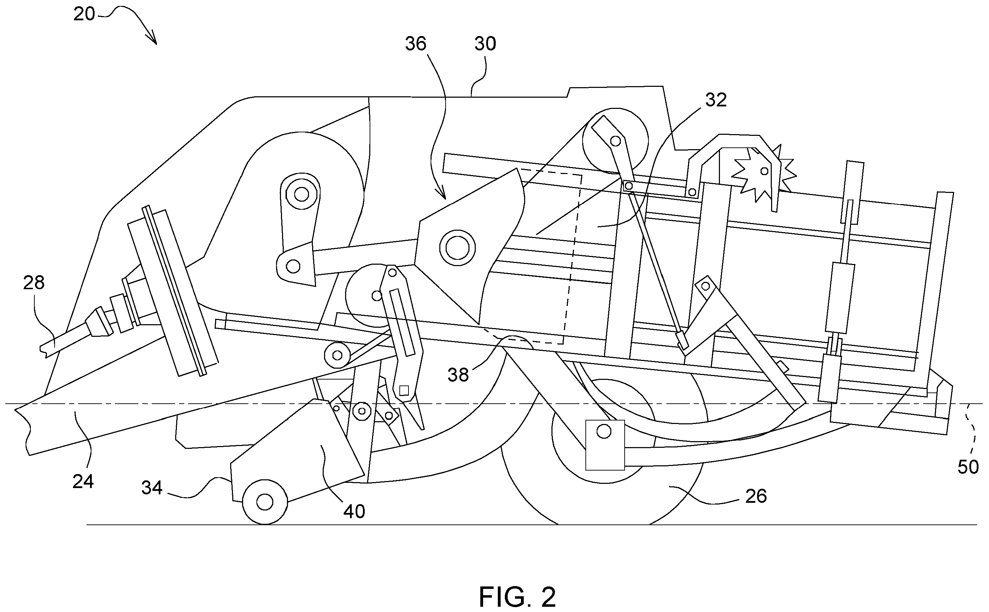

Referring to the Figures, wherein like numerals indicate like parts throughout the several views, a baler implement is generally shown at 20 in FIGS. 1 and 2. Referring to FIG. 1, the baler implement 20 is shown as a large square baler. However, it should be appreciated that the teachings of this disclosure may be applied to other baler platforms, such as a round baler, and are not limited to the example implementation of the large square baler shown in the Figures and described herein.

As shown in FIG. 1, a traction unit 22 or vehicle, such as but not limited to a tractor, is coupled to the baler implement 20 for pulling and powering the baler implement 20. However, it should be appreciated that in other embodiments, the baler implement 20 may be self-propelled, in which case the traction unit 22 and the baler implement 20 are configured as a single, self-propelled vehicle. The baler implement 20 may move across a field and gather and process crop material to form a bale. The baler implement 20 may then eject the formed bale from the rear of the baler implement 20.

Referring to FIG. 2, the exemplary embodiment of the baler implement 20 includes a frame 24, ground engaging devices 26, such as but not limited to wheels, tracks, skids, etc., and an input shaft 28, such as a power-take-off (PTO) shaft, which can receive rotational power from a power source, such as the tractor. The baler implement 20 includes a housing 30 or body, which generally shields various internal components of the baler implement 20. The housing 30 is attached to and supported by the frame 24. The housing 30 includes multiple wall sections or panels that form and/or define a baling chamber 32 for forming the bale. The baling chamber 32 may alternatively be referred to as a compression chamber.

The baler implement 20 includes a pick-up mechanism 34 attached to the frame 24. The pick-up mechanism 34 is disposed proximate the forward end of the frame 24 and is positioned forward of a bale formation system 36. The pick-up mechanism 34 gathers crop material from the ground surface and directs the gathered crop material toward and into an inlet 38 of the bale formation system 36. The pickup may include, but is not limited to tines, forks, augers, conveyors, baffles, etc., for gathering and moving the crop material.

The baler implement 20 may be equipped with a pre-cutter assembly 40 disposed between the pickup and the inlet 38 of the bale formation system 36. As such, the pre-cutter assembly 40 is disposed downstream of the pickup and upstream of the inlet 38 relative to a direction of travel of the crop material. The pre-cutter assembly 40 cuts or chops the crop material into smaller pieces, and is described in greater detail below.

The pick-up mechanism 34 directs the gathered crop material through the pre-cuter assembly and into the bale formation system 36. The bale formation system 36 is attached to the frame 24, and includes and/or defines the baling chamber 32 operable to form and/or compress the crop material into the bale, and secures the bale with a wrap or knotter system. The crop material is introduced into the baling chamber 32 through the inlet 38 of the bale formation system 36. The features, operation, and components of different bale formations systems, e.g., round baler systems and square baler systems, are known to those skilled in the art, are not pertinent to the teachings of this disclosure, and are therefore not described in greater detail herein.

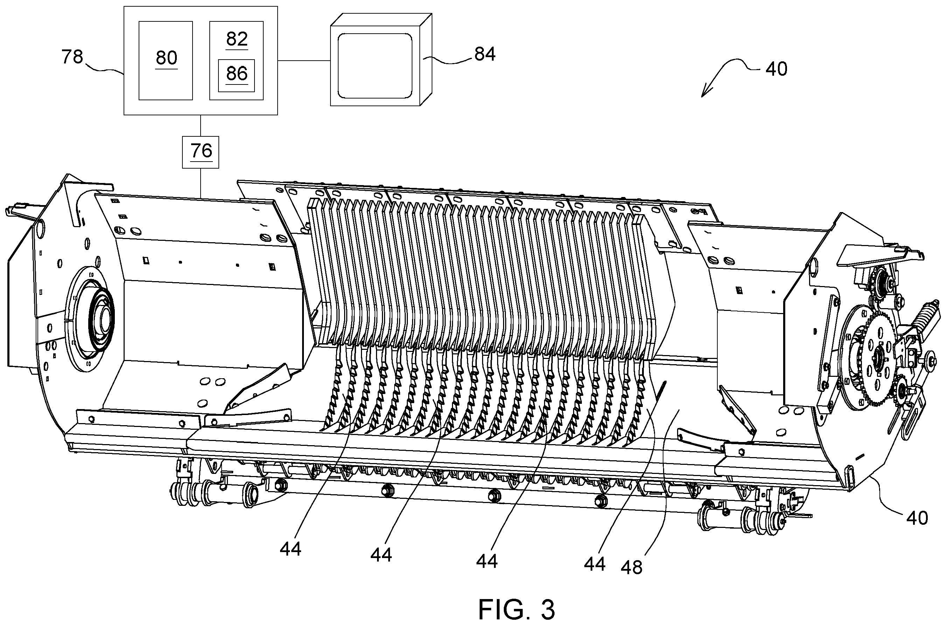

Referring to FIG. 3, the pre-cutter assembly 40 includes a support structure 42. The support structure 42 may include various components, such as but not limited to, plates, bars, brackets, etc., fastened together to form a frame 24 or skeleton that supports the various components of the pre-cutter assembly 40 described in greater detail below. The specific shape, construction and components of the support structure 42 may vary based on design and application, are understood by those skilled in the art, and are therefore not described in greater detail herein.

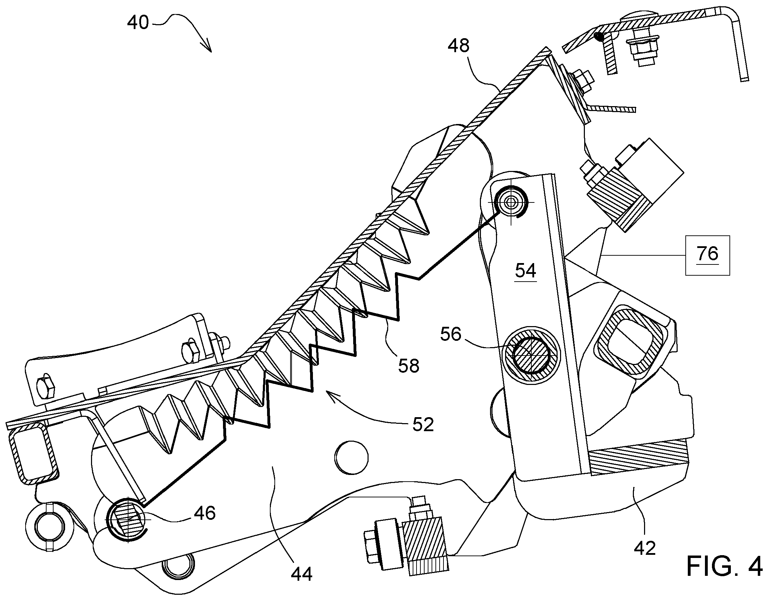

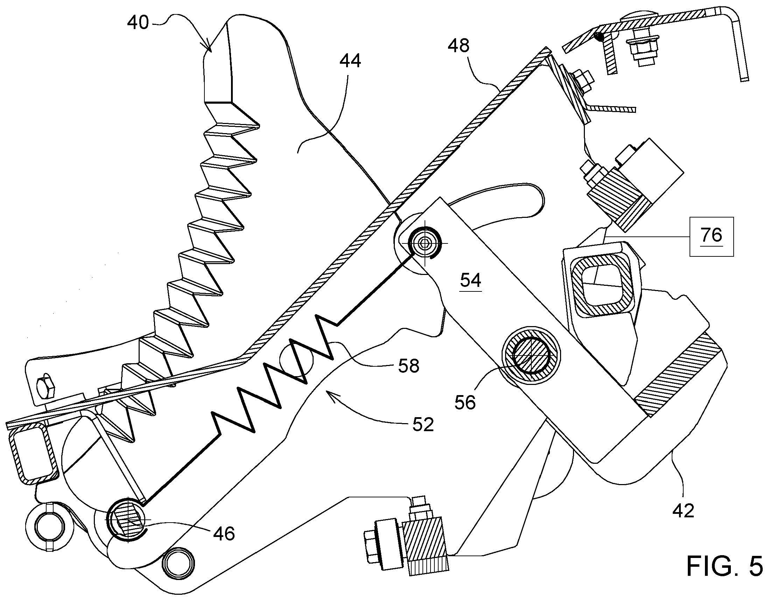

As shown in FIG. 3, the pre-cutter assembly 40 includes a plurality of knives 44. Referring to FIGS. 4 and 5, each respective one of the plurality of knives 44 is rotatable relative to the support structure 42 for rotation about a knife rotation axis 46. The knives 44 may be coupled to the support structure 42 via a knife shaft passing through each and defining the knife rotation axis 46. Each respective one of the knives 44 is rotatable between a deployed position, shown in FIG. 4 and a retracted position, shown in FIG. 5. When the knives 44 are disposed in their respective retracted position, the knives 44 are positioned below a floor 48 of the support structure 42 and do not engage crop material. When the knives 44 are disposed in their respective deployed position, the knives 44 extend vertically upward through the floor 48 for engaging crop material. The knife rotation axis 46 extends transverse to a central longitudinal axis 50 of the frame 24. Each of the knives 44 includes a generally planar structure that is arranged in a generally upright or vertical orientation, such that the large planar surfaces extend vertically and are arranged perpendicular to the knife rotation axis 46, thereby presenting a thin knife edge to the flow of the crop material. The knives 44 are spaced apart from each other, with each adjacent pair of the knives 44 forming a gap therebetween.

Referring to FIGS. 4 and 5, the pre-cutter assembly 40 may further include an overload protection system 52 configured to protect the knives 44 from damage when contacted by an object during operation. For example, the overload protection system 52 may include a plurality of engagement arms 54. Each respective one of the plurality of engagement arms 54 may be arranged for engagement with a respective one of the plurality of knives 44. Each respective one of the engagement arms 54 may be rotatable about an arm rotation axis 56 between a release position and a latch position. When the knives 44 are moved into their respective deployed position, the respective engagement arm 54 associated therewith may be biased into its respective latch position by a respective spring 58 to secure the associated knife 44 in its deployed position. Spring tension holds the engagement arm 54 in interlocking engagement with the knife 44, which in turn holds the knife 44 in its deployed position. In response to a force applied to the knife 44 having a magnitude greater than the spring tension, such as may occur when an object strikes or impacts the knife 44, the engagement arm 54 may be moved out of interlocking engagement with the associated knife 44, thereby allowing the knife 44 to drop down into its respective retracted position. By doing so, impact damage to the knife 44 may be avoided.

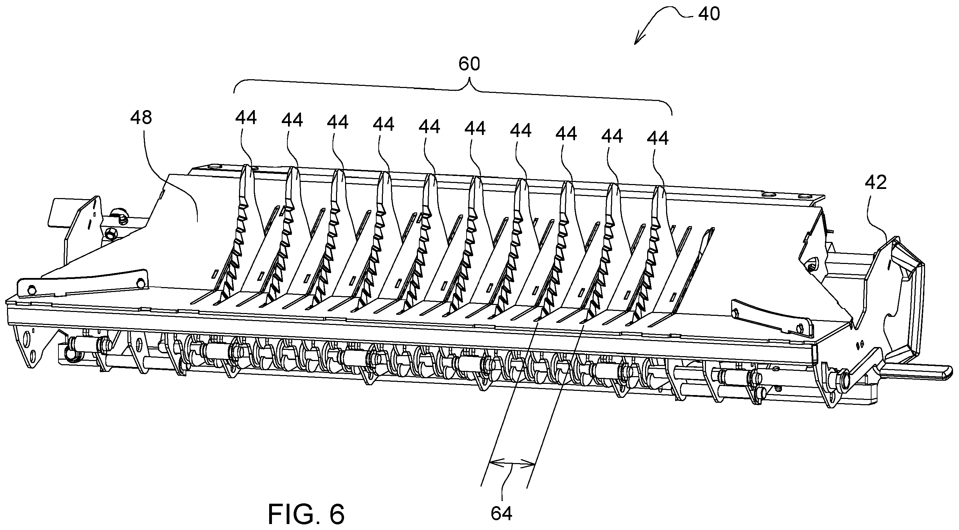

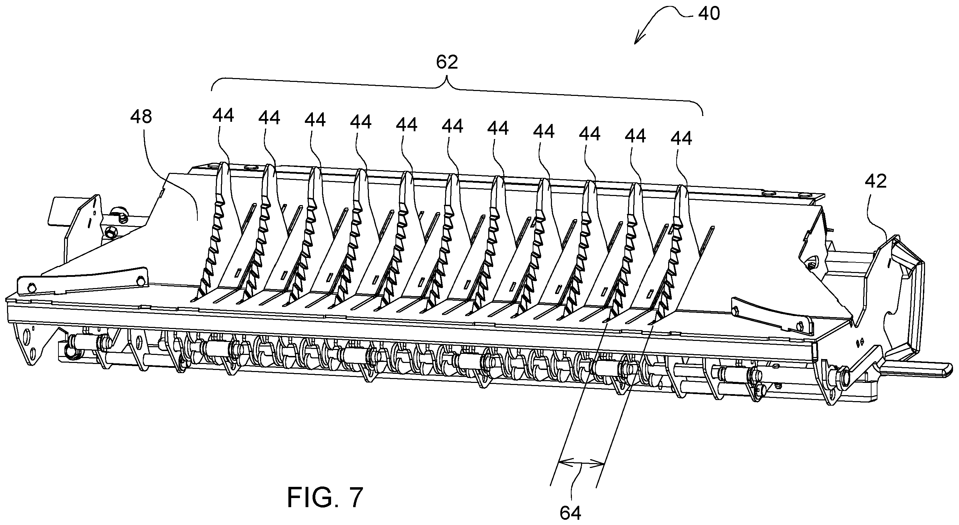

Referring to FIGS. 3, 6 and 7, the plurality of knives 44 may be portioned to include a first set of knives 60 and a second set of knives 62. As best shown in FIG. 3, in one implementation, the first set of knives 60 and the second set of knives 62 include an equal number of knives 44 arranged in an alternating sequence in which one knife 44 from the first set of knives 60 is positioned between two adjacent knives 44 of the second set of knives 62. Similarly, one knife 44 of the second set of knives 62 is positioned between two adjacent knives 44 of the first set of knives 60. The first set of knives 60 and the second set of knives 62 are each moveable independent of each other relative to the support structure 42 between their respective retracted positions and the respective deployed positions. Referring to FIG. 6, the first set of knives are disposed in their respective deployed positions, while the second set of knives are disposed in their respective retracted positions. In contrast, referring to FIG. 7, the first set of knives are disposed in their respective retracted positions, while the second set of knives are disposed in their respective deployed positions.

Each adjacent pair of knives 44 of the first set of knives 60 may be spaced apart from each other a first separation distance 64. Similarly, each adjacent pair of knives 44 of the second set of knives 62 may be spaced apart from each other a second separation distance 66. In one implementation, the first separation distance 64 may be equal to the second separation distance 66. In this configuration, either the first set of knives 60 or the second set of knives 62 may be deployed to provide the same cut length. Additionally, in his configuration, both the first set of knives 60 and the second set of knives 62 may be deployed to provide a cut length that is one half the first separation distance 64 and the second separation distance 66. However, it should be appreciated that in other implementations, the first separation distance 64 may be different from the second separation distance 66. Additionally, it should be appreciated that the pre-cutter assembly 40 may be configured to include only a single set of knives 44, or more than the example two sets of knives 44.

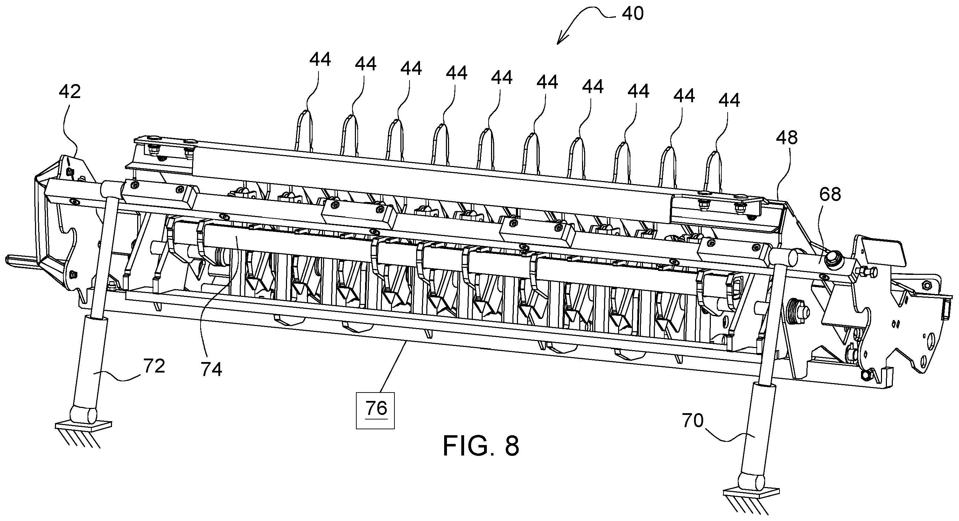

Referring to FIG. 8, in the example implementation shown in the Figures and described herein, a first actuator 68 is coupled to the first set of knives 60. The first actuator 68 is operable to move the first set of knives 60 between its respective retracted position and its respective deployed position. In the example implementation shown in the figures and described herein, the first actuator 68 includes a first tray 70 configured to engage and lift the first set of knives 60 from their respective retracted positions into their respective deployed positions. The first actuator 68 may further move the engagement arms 54 of the associated knives 44 from their respective release positions into their respective latch positions. The first tray 70 may be coupled to a motor, hydraulic cylinder, or some other motivator to effectuate movement of the first tray 70 and the first set of knives 60. It should be appreciated that the first actuator 68 may differ from the example implementation shown in the Figures and described herein.

Similarly, a second actuator 72 is coupled to the second set of knives 62. The second actuator 72 is operable to move the second set of knives 62 between their respective retracted positions and their respective deployed positions. In the example implementation shown in the figures and described herein, the second actuator 72 includes a second tray 74 configured to engage and lift the second set of knives 62 from their respective retracted positions into their respective deployed positions. The second actuator 72 may further move the engagement arms 54 of the associated knives 44 from their respective release positions into their respective latch positions. The second tray 74 may be coupled to a motor, hydraulic cylinder, or some other motivator to effectuate movement of the first tray 70 and the first set of knives 60. It should be appreciated that the second actuator 72 may differ from the example implementation shown in the Figures and described herein.

The pre-cutter assembly 40 may further include a position sensor 76. The positions sensor is positioned to sense data related to a current position of the first set of knives 60 and a current position of the second set of knives 62. The position sensor 76 may include, but is not limited to, a proximity sensor, a camera, a NIR sensor, a potentiometer, etc. the position sensor 76 generates an output signal including the data related to the current position of the first set of knives 60 and the second set of knives 62. The position sensor 76 is disposed in communication with a controller 78 for communicating the data signal thereto.

The controller 78 disposed in communication with the position sensor 76 and is operatively coupled to the first actuator 68 and the second actuator 72. The controller 78 is operable to receive data signals from the position sensor 76, and communicate a signal to the first actuator 68 and the second actuator 72. Additionally, the controller 78 may be operable to communicate one or more signals to a user interface 84. The user interface 84 may include a device capable of communicating a message to an operator. For example, the user interface 84 may include, but is not limited to, a visual communicator, an audio communicator or a tactile communicator. The user interface 84 may be configured to receive input commands and generate output messages. In one example, the user interface 84 may include, but is not limited to, a visual display such as a touch screen display, disposed in a work station of the associated traction unit 22. However, it should be appreciated that the user interface 84 may differ from the example implementation of the touch screen display.

While the controller 78 is generally described herein as a singular device, it should be appreciated that the controller 78 may include multiple devices linked together to share and/or communicate information therebetween. Furthermore, it should be appreciated that the controller 78 may be located on the pre-cutter assembly 40, on the baler implement 20, or located remotely from the baler implement 20, such as on the associated traction unit 22.

The controller 78 may alternatively be referred to as a computing device, a computer, a control unit, a control module, a module, etc. The controller 78 includes a processor 80, a memory 82, and all software, hardware, algorithms, connections, sensors, etc., necessary to manage and control the operation of the position sensor 76, the first actuator 68, the second actuator 72, and the user interface 84. As such, a method may be embodied as a program or algorithm operable on the controller 78. It should be appreciated that the controller 78 may include any device capable of analyzing data from various sensors, comparing data, making decisions, and executing the required tasks.

As used herein, "controller" is intended to be used consistent with how the term is used by a person of skill in the art, and refers to a computing component with processing, memory, and communication capabilities, which is utilized to execute instructions (i.e., stored on the memory 82 or received via the communication capabilities) to control or communicate with one or more other components. In certain embodiments, the controller 78 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The controller 78 may be in communication with other components on the baler implement 20 and/or traction unit 22, such as hydraulic components, electrical components, and operator inputs within an operator station of an associated work vehicle. The controller 78 may be electrically connected to these other components by a wiring harness such that messages, commands, and electrical power may be transmitted between the controller 78 and the other components. Although the controller 78 is referenced in the singular, in alternative embodiments the configuration and functionality described herein can be split across multiple devices using techniques known to a person of ordinary skill in the art.

The controller 78 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 82 may include any non-transitory/tangible medium which participates in providing data or computer-readable instructions. The memory 82 may be non-volatile or volatile. Non-volatile media may include, for example, optical or magnetic disks and other persistent memory. Example volatile media may include dynamic random access memory (DRAM), which may constitute a main memory. Other examples of embodiments for memory 82 include a floppy, flexible disk, or hard disk, magnetic tape or other magnetic medium, a CD-ROM, DVD, and/or any other optical medium, as well as other possible memory devices such as flash memory.

The controller 78 includes the tangible, non-transitory memory 82 on which are recorded computer-executable instructions, including a knife control algorithm 86. The processor 80 of the controller 78 is configured for executing the knife control algorithm 86. The knife control algorithm 86 implements a method of pre-cutter assembly 40, described in detail below.

To begin the process, the controller 78 may first determine a current baler operating parameter of the baler implement 20. The current baler operating parameter may include, but is not limited to, one of: a current crop type, a current crop flow rate, a desired bale density, a current bale density, a moisture content, a field location, etc. In one aspect of the disclosure, the controller 78 may be in communication with one or more sensors, computing devices, etc., of the baler implement 20 and/or the associated traction unit 22 to obtain dada related to one or more of the current baler operating parameters. As such, the controller 78 is operable to receive data related to at least one of a current weight of a bale, a current size of a bale, a current crop type of a bale, a desired density of the bale, a moisture content of the crop material, a location of the baler implement 20, etc. Additionally, the controller 78 may receive data related to current baler operating parameters from the user interface 84 as an input from an operator. For example, the operator may input the desired bale density, the desired bale size, the crop type, or other information into the user interface 84, which in turn communicates these inputs to the controller 78. Additionally, the controller 78 may query computing systems of the baler implement 20 and/or the traction unit 22 to obtain data related to the current baler operating parameters, such as but not limited to a current weight of the bale, a current size of the bale, a current location of the baler implement 20, etc.

The controller 78 may then determine a status of the first set of knives 60 and determine a status of the second set of knives 62. The status of the first set of knives 60 and the status of the second set of knives 62 may include, but is not limited to, a current position of each of the first set of knives 60 and the second set of knives 62, a cumulative usage of each of the first set of knives 60 and the second set of knives 62, or a current sharpness or sharpness rating of each of the first set of knives 60 and the second set of knives 62, etc.

For example, the controller 78 may determine the status of the first set of knives 60 by determining a current position of the first set of knives 60 to be one of the retracted position of the first set of knives 60 or the deployed position of the first set of knives 60. Similarly, the controller 78 may determine the status of the second set of knives 62 by determining a current position of the second set of knives 62 to be one of the retracted position of the second set of knives 62 or the deployed position of the second set of knives 62. The controller 78 may use the current position of the first set of knives 60 and the current position of the second set of knives 62 to determine how to control the first actuator 68 and the second actuator 72.

Optionally, the controller 78 may communicate a position signal to the user interface 84 to communicate the current position of the first set of knives 60 and the current position of the second set of knives 62. For example, the user interface 84 may include a text message indicating whether the first set of knives 60 is deployed or retracted and whether the second set of knives 62 is deployed or retracted. Additionally, the user interface 84 may display a pictorial representation of the pre-cutter assembly 40 showing the relative positions of the first set of knives 60 and the second set of knives 62. In other implementations, indicator lights for the relative positions of the first set of knives 60 and the second set of knives 62 may be illuminated. It should be appreciated that the position of the first set of knives 60 and the second set of knives 62 may be communicated via the user interface 84 in a manner other than described herein.

The controller 78 may determine the status of the first set of knives 60 by tracking a cumulative usage of the first set of knives 60 over time. For example, the controller 78 may track a total number of bales formed using the first set of knives 60, a total throughput of crop and/or a particular type of crop using the first set of knives 60, a total number of hours in which the first set of knives 60 were deployed, etc. It should be appreciated that the cumulative usage may be tracked from initial installation of the first set of knives 60 to the current time to understand a total usage of the first set of knives 60. Additionally, it should be appreciated that the cumulative usage may track some other usage characteristic other than the examples provided herein that may represent an amount or degree of use and/or a remaining life of the first set of knives 60.

Similarly, the controller 78 may determine the status of the second set of knives 62 by tracking a cumulative usage of the second set of knives 62 over time. For example, the controller 78 may track a total number of bales formed using the second set of knives 62, a total throughput of crop and/or a particular type of crop using the second set of knives 62, a total number of hours in which the second set of knives 62 were deployed, etc. It should be appreciated that the cumulative usage may be tracked from initial installation of the second set of knives 62 to the current time to understand a total usage of the second set of knives 62. Additionally, it should be appreciated that the cumulative usage may track some other usage characteristic other than the examples provided herein that may represent an amount or degree of use and/or a remaining life of the second set of knives 62.

The controller 78 may then compare the cumulative usage of the first set of knives 60 to the cumulative usage of the second set of knives 62 to determine which one of the cumulative usage of the first set of knives 60 and the cumulative usage of the second set of knives 62 is less, i.e., which of the first set of knives 60 and the second set of knives 62 has been deployed less. The controller 78 may then use this status indicator of the first set of knives 60 and the second set of knives 62 to determine how to control the pre-cutter assembly 40.

Optionally, the controller 78 may communicate a status signal to the user interface 84 to communicate the current status of the first set of knives 60 and the current status of the second set of knives 62. For example, the user interface 84 may include a text message indicating the cumulative usage of the first set of knives 60 and the cumulative usage of the second set of knives 62. Alternatively, the user interface 84 may display a pictorial representation showing the life expectancy of the first set of knives 60 and the life expectancy second set of knives 62. It should be appreciated that the cumulative usage of the first set of knives 60 and the cumulative usage of the second set of knives 62 may be communicated via the user interface 84 in a manner other than described herein.

In another example, the controller 78 may determine the status of the first set of knives 60 by determining a current sharpness of the first set of knives 60. The sharpness of the knives 44 may be defined as an ability to cut the crop material cleanly. A sharp knife 44 will achieve a clean, crisp cut, whereas a dull knife 44 will tend to tear and drip the crop material, leaving a jagged edge. The controller 78 may determine the sharpness of the first set of knives 60 by, for example, capturing images of the cut edges of the crop material when using the first set of knives 60 and analyzing the images to detect and classify the cut edges. The classification of the cut edges of the crop material from the first set of knives 60 may then be correlated to a sharpness score, rating or index for the first set of knives 60. In other implementations, the sharpness of the first set of knives 60 may be related to a power usage of the pre-cutter assembly 40. As such, the power usage may be associated with a sharpness score, rating or index for the first set of knives 60. It should be appreciated that the sharpness of the first set of knives 60 may be determined in some manner other than described herein.

Similarly, the controller 78 may determine the status of the second set of knives 62 by determining a current sharpness of the second set of knives 62. The controller 78 may determine the sharpness of the second set of knives 62 by, for example, capturing images of the cut edges of the crop material when using the second set of knives 62 and analyzing the images to detect and classify the cut edges. The classification of the cut edges of the crop material from the second set of knives 62 may then be correlated to a sharpness score, rating or index for the second set of knives 62. In other implementations, the sharpness of the second set of knives 62 may be related to a power usage of the pre-cutter assembly 40. As such, the power usage may be associated with a sharpness score, rating or index for the second set of knives 62. It should be appreciated that the sharpness of the second set of knives 62 may be determined in some manner other than described herein.

The controller 78 may then compare the sharpness of the first set of knives 60 to the sharpness of the second set of knives 62 to determine which one of the sharpness of the first set of knives 60 and the sharpness of the second set of knives 62 is greater, i.e., which of the first set of knives 60 and the second set of knives 62 exhibits the greatest sharpness. The controller 78 may then use this status indicator of the first set of knives 60 and the second set of knives 62 to determine how to control the pre-cutter assembly 40.

As noted above, the controller 78 may communicate the status signal to the user interface 84 to communicate the current status of the first set of knives 60 and the current status of the second set of knives 62. For example, the user interface 84 may include a text message indicating the sharpness of the first set of knives 60 and the sharpness of the second set of knives 62. Alternatively, the user interface 84 may display a pictorial representation representing the sharpness of the first set of knives 60 and the sharpness of the second set of knives 62. It should be appreciated that the sharpness of the first set of knives 60 and the sharpness of the second set of knives 62 may be communicated via the user interface 84 in a manner other than described herein.

The controller 78 may then define a desired positional setting for the first set of knives 60 and define a desired positional setting for the second set of knives 62. The controller 78 may define the desired positional setting for the first set of knives 60 to include one of the retracted position of the first set of knives 60 and the deployed position of the first set of knives 60. The controller 78 may define the desired positional setting of the first set of knives 60 based on the current baler operating parameter, the status of the first set of knives 60, and the status of the second set of knives 62. The controller 78 may define the desired positional setting for the second set of knives 62 to include one of the retracted position of the second set of knives 62 and the deployed position of the second set of knives 62. The controller 78 may define the desired positional setting of the second set of knives 62 based on the current baler operating parameter, the status of the first set of knives 60, and the status of the second set of knives 62.

As an example, if the current baler operating parameters, e.g., crop type being processed, moisture content, bale density, etc. is a type that requires only one of the first set of knives 60 or the second set of knives 62 be deployed, then the controller 78 may decide which one of the first set of knives 60 and the second set of knives 62 to deploy and which to retract based on the cumulative usage of the first set of knives 60 and the cumulative usage of the second set of knives 62, and/or the sharpness of the first set of knives 60 and the sharpness of the second set of knives 62. For example, if the cumulative usage of the first set of knives 60 and the cumulative usage of the second set of knives 62 is approximately equal, then the controller 78 may decide to deploy the set of knives 44 having the greatest sharpness, and retract the set of knives 44 having the least sharpness. In contrast, if the sharpness of the first set of knives 60 and the sharpness of the second set of knives 62 is approximately equal, then the controller 78 may decide to deploy the set of knives 44 having the lowest cumulative usage, and retract the set of knives 44 having the greatest cumulative usage. The controller 78 may then define the desired positional setting for the first set of knives 60 and define a desired positional setting for the second set of knives 62 accordingly.

As another example, if the current baler operating parameters, e.g., crop type being processed, moisture content, bale density, etc. is a type that requires both of the first set of knives 60 and the second set of knives 62 be deployed simultaneously, then the controller 78 may accordingly define the desired positional setting for the first set of knives 60 to include the deployed position and define the desired positional setting for the second set of knives 62 to also include the deployed position.

Once the controller 78 has define the desired positional setting for the first set of knives 60 and the desired positional setting for the second set of knives 62, the controller 78 may then communicate a control signal to the first actuator 68 and/or the second actuator 72. The control signal is operable to control the first actuator 68 to position the first set of knives 60 in the desired position setting for the first set of knives 60 and to control the second actuator 72 to position the second set of knives 62 in the desired position setting for the second set of knives 62. The control signal may include, but is not limited to, an electrical control signal, a hydraulic control signal, a combination of an electrical over hydraulic signal, etc. It should be appreciated that the manner in which the first actuator 68 and the second actuator 72 are controlled is understood by those skilled in the art and is therefore not described in greater detail herein.

As described above, the pre-cutter assembly 40 may include the overload protection system 52 to prevent damage to one of the knives 44. Upon an object contacting one of the knives 44 with sufficient force, the knife 44 may be released and allowed to drop down into its respective retracted position. In one aspect of the disclosure, the controller 78 may be configured to detect actuation of the overload protection system 52 of one of the first set of knives 60 and the second set of knives 62. The controller 78 may detect actuation of the overload protection system 52 in a suitable manner. For example, an optical scanner may visually detect the position of the knives 44 and use that data to determine if the knife 44 has dropped into its retracted position when it should currently be deployed. In other implementations, the knives 44 may have sensors associated therewith that detect movement. It should be appreciated that the actuation of the overload protection system 52 may be detected in any number of ways, other than the example implementations described herein.

Upon the controller 78 detecting the actuation of the overload protection system 52, the controller 78 may automatically re-set one of the first set of knives 60 and the second set of knives 62 in response to actuation of the overload protection system 52. The controller 78 may re-set the first set of knives 60 and/or the second set of knives 62 by cycling the first actuator 68 and/or the second actuator 72 to lift the respective dropped knife 44 back into its deployed position. In some situations, the controller 78 may lower all of the knives 44 of the first set of knives 60 and the second set of knives 62 into their respective retracted positions and then control the first actuator 68 to move the first set of knives 60 into the desired positional setting for the first set of knives 60 and control the second set of knives 62 to move the second set of knives 62 into the desired positional setting for the second set of knives 62.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A pre-cutter assembly (40) for a baler implement (20), the pre-cutter assembly (40) comprising:
a support structure (42);
a plurality of knives (44) including a first set of knives (60) and a second set of knives (62), wherein the first set of knives (60) and the second set of knives (62) are each moveable independent of each other relative to the support structure (42) between a retracted position and a deployed position;
a first actuator (68) coupled to the first set of knives (60) and operable to move the first set of knives (60) between its respective retracted position and its respective deployed position;
a second actuator (72) coupled to the second set of knives (62) and operable to move the second set of knives (62) between its respective retracted position and its respective deployed position;
a controller (78) operatively coupled to the first actuator (68) and the second actuator (72), wherein the controller (78) includes a processor (80) and a memory (82) having a knife control algorithm (86) stored therein, wherein the processor (80) is operable execute the knife control algorithm (86) to:
determine a current baler operating parameter;
determine a status of the first set of knives (60) and a status of the second set of knives (62);
define a desired positional setting for the first set of knives (60) to include one of the retracted position of the first set of knives (60) and the deployed position of the first set of knives (60), based on the current baler operating parameter, the status of the first set of knives (60), and the status of the second set of knives (62);
define a desired positional setting for the second set of knives (62) to include one of the retracted position of the second set of knives (62) and the deployed position of the second set of knives (62), based on the current baler operating parameter, the status of the first set of knives (60), and the status of the second set of knives (62); and
communicate a control signal to the first actuator (68) and the second actuator (72) to control the first actuator (68) to position the first set of er knives (60) in the desired position setting for the first set of knives (60) and to control the second actuator (72) to position the second set of knives (62) in the desired position setting for the second set of knives (62),
**characterized in that**,
the processor (80) is operable to execute the knife control algorithm (86) to determine the status of the first set of er knives (60) by tracking a cumulative usage of the first set of knives (60) over time, and to determine the status of the second set of knives (62) by tracking a cumulative usage of the second set of knives (62) over a period of time.

2. The pre-cutter assembly (40) set forth in claim 1, wherein the processor (80) is operable execute the knife control algorithm (86) to determine the current baler operating parameter by determining one of: a current crop type, a current crop flow rate, a desired bale density, and a current bale density.

3. The pre-cutter assembly (40) according to at least one of the preceding claims, wherein the processor (80) is operable to execute the knife control algorithm (86) to define the desired positional setting for the first set of knives (60) and the desired positional setting for the second set of knives (62) based on which one of the cumulative usage of the first set of knives (60) and the cumulative usage of the second set of knives (62) is less.

4. The pre-cutter assembly (40) according to at least one of the preceding claims, wherein the processor (80) is operable to execute the knife control algorithm (86) to determine the status of the first set of knives (60) by determining a current sharpness of the first set of knives (60), and to determine the status of the second set of knives (62) by determining a current sharpness of the second set of knives (62).

5. The pre-cutter assembly (40) according to claim 4, wherein the processor (80) is operable to execute the knife control algorithm (86) to define the desired positional setting for the first set of knives (60) and the desired positional setting for the second set of knives (62) based on which one of the current sharpness of the first set of knives (60) and the current sharpness of the second set of knives (62) is greater.

6. The pre-cutter assembly (40) according to at least one of the preceding claims, wherein the processor (80) is operable to execute the knife control algorithm (86) to communicate a status signal to a user interface (84) to communicate the status of the first set of knives (60) and the status of the second set of knives (62).

7. The pre-cutter assembly (40) according to at least one of the preceding claims, wherein the processor (80) is operable to execute the knife control algorithm (86) to determine the status of the first set of knives (60) by determining a current position of the first set of erknives (60) to be one of the retracted position of the first set of knives (60) or the deployed position of the first set of knives (60), and determine the status of the second set of knives (62) by determining a current position of the second set of knives (62) to be one of the retracted position of the second set of knives (62) or the deployed position of the second set of knives (62).

8. The pre-cutter assembly (40) according to at least one of the preceding claims, wherein the processor (80) is operable to execute the knife control algorithm (86) to communicate a position signal to a user interface (84) to communicate the current position of the first set of knives (60) and the current position of the second set of knives (62).

9. The pre-cutter assembly (40) according to at least one of the preceding claims, wherein the processor (80) is operable to execute the knife control algorithm (86) to receive data related to at least one of a current weight of a bale, a current size of a bale, a current crop type of a bale, and a desired density of the bale.

10. The pre-cutter assembly (40) according to at least one of the preceding claims, further comprising a position sensor (76) disposed in communication with the controller (78) and positioned to sense data related to a current position of the first set of knives (60) and a current position of the second set of knives (62).

11. The pre-cutter assembly (40) according to at least one of the preceding claims, wherein the processor (80) is operable to execute the knife control algorithm (86) to detect actuation of an overload protection system (52) of one of the first set of knives (60) and the second set of knives (62).

12. The pre-cutter assembly (40) according to claim 11, wherein the processor (80) is operable to execute the knife control algorithm (86) to automatically re-set one of the first set of knives (60) and the second set of knives (62) in response to actuation of the overload protection system (52).

13. A baler implement comprising a pre-cutter assembly (40) according to at least one of the claims 1 to 12.

14. A baler implement set forth in claim 13, the baler implement comprising:
a frame having a ground engagement device coupled thereto for traversing across a ground surface;
a bale formation system attached to the frame and including a compression chamber operable to form crop material into a bale, wherein the compression chamber includes an inlet for receiving the crop material therethrough;
a pick-up attached to the frame and positioned forward of the bale formation system relative to a direction of travel during operation and operable to gather the crop material and convey the crop material through the inlet and into the compression chamber;
the pre-cutter assembly attached to the frame and positioned between the pick-up and the inlet of the compression chamber.

## Patentansprüche

1. Vorschneideranordnung (40) für ein Ballenpressengerät (20), wobei die Vorschneideranordnung (40) Folgendes umfasst:
eine Tragstruktur (42);
mehrere Messer (44), die einen ersten Satz von Messern (60) und einen zweiten Satz von Messern (62) beinhalten, wobei der erste Satz von Messern (60) und der zweite Satz von Messern (62) jeweils unabhängig voneinander relativ zu der Tragstruktur (42) zwischen einer eingezogenen Position und einer ausgefahrenen Position beweglich sind;
einen ersten Aktuator (68), der mit dem ersten Satz von Messern (60) gekoppelt ist und betreibbar ist, um den ersten Satz von Messern (60) zwischen seiner jeweiligen eingezogenen Position und seiner jeweiligen ausgefahrenen Position zu bewegen;
einen zweiten Aktuator (72), der mit dem zweiten Satz von Messern (62) gekoppelt ist und betreibbar ist, um den zweiten Satz von Messern (62) zwischen seiner jeweiligen eingezogenen Position und seiner jeweiligen ausgefahrenen Position zu bewegen;
eine Steuerung (78), die mit dem ersten Aktuator (68) und dem zweiten Aktuator (72) wirkgekoppelt ist, wobei die Steuerung (78) einen Prozessor (80) und einen Speicher (82) mit einem darin gespeicherten Messersteueralgorithmus (86) beinhaltet, wobei der Prozessor (80) dazu betreibbar ist, den Messersteueralgorithmus (86) auszuführen zum:
Bestimmen eines aktuellen Betriebsparameters der Ballenpresse;
Bestimmen eines Status des ersten Satzes von Messern (60) und eines Status des zweiten Satzes von Messern (62);
Definieren einer gewünschten Positionseinstellung für den ersten Satz von Messern (60), um entweder die eingezogene Position des ersten Satzes von Messern (60) oder die ausgefahrene Position des ersten Satzes von Messern (60) zu beinhalten, basierend auf dem aktuellen Betriebsparameter der Ballenpresse, dem Status des ersten Satzes von Messern (60) und dem Status des zweiten Satzes von Messern (62);
Definieren einer gewünschten Positionseinstellung für den zweiten Satz von Messern (62), um entweder die eingezogene Position des zweiten Satzes von Messern (62) oder die ausgefahrene Position des zweiten Satzes von Messern (62) zu beinhalten, basierend auf dem aktuellen Betriebsparameter der Ballenpresse, dem Status des ersten Satzes von Messern (60) und dem Status des zweiten Satzes von Messern (62); und
Kommunizieren eines Steuersignals an den ersten Aktuator (68) und den zweiten Aktuator (72), um den ersten Aktuator (68) zu steuern, um den ersten Satz von Messern (60) in der gewünschten Positionseinstellung für den ersten Satz von Messern (60) zu positionieren, und um den zweiten Aktuator (72) zu steuern, um den zweiten Satz von Messern (62) in der gewünschten Positionseinstellung für den zweiten Satz von Messern (62) zu positionieren,
**dadurch gekennzeichnet, dass**
der Prozessor (80) dazu betreibbar ist, den Messersteueralgorithmus (86) auszuführen, um den Status des ersten Satzes von Messern (60) durch Verfolgen einer kumulativen Verwendung des ersten Satzes von Messern (60) über die Zeit zu bestimmen, und um den Status des zweiten Satzes von Messern (62) durch Verfolgen einer kumulativen Verwendung des zweiten Satzes von Messern (62) über einen Zeitraum zu bestimmen.

2. Vorschneideranordnung (40) nach Anspruch 1, wobei der Prozessor (80) dazu betreibbar ist, den Messersteueralgorithmus (86) auszuführen, um den aktuellen Betriebsparameter der Ballenpresse durch Bestimmen von einem aus Folgendem zu bestimmen: einem aktuellen Ernteguttyp, einer aktuellen Erntegutflussrate, einer gewünschten Ballendichte und einer aktuellen Ballendichte.

3. Vorschneideranordnung (40) nach mindestens einem der vorhergehenden Ansprüche, wobei der Prozessor (80) dazu betreibbar ist, den Messersteueralgorithmus (86) auszuführen, um die gewünschte Positionseinstellung für den ersten Satz von Messern (60) und die gewünschte Positionseinstellung für den zweiten Satz von Messern (62) basierend darauf zu definieren, welche aus der kumulativen Verwendung des ersten Satzes von Messern (60) und der kumulativen Verwendung des zweiten Satzes von Messern (62) geringer ist.

4. Vorschneideranordnung (40) nach mindestens einem der vorhergehenden Ansprüche, wobei der Prozessor (80) dazu betreibbar ist, den Messersteueralgorithmus (86) auszuführen, um den Status des ersten Satzes von Messern (60) durch Bestimmen einer aktuellen Schärfe des ersten Satzes von Messern (60) zu bestimmen, und um den Status des zweiten Satzes von Messern (62) durch Bestimmen einer aktuellen Schärfe des zweiten Satzes von Messern (62) zu bestimmen.

5. Vorschneideranordnung (40) nach Anspruch 4, wobei der Prozessor (80) dazu betreibbar ist, den Messersteueralgorithmus (86) auszuführen, um die gewünschte Positionseinstellung für den ersten Satz von Messern (60) und die gewünschte Positionseinstellung für den zweiten Satz von Messern (62) basierend darauf zu definieren, welche aus der aktuellen Schärfe des ersten Satzes von Messern (60) und der aktuellen Schärfe des zweiten Satzes von Messern (62) größer ist.

6. Vorschneideranordnung (40) nach mindestens einem der vorhergehenden Ansprüche, wobei der Prozessor (80) dazu betreibbar ist, den Messersteueralgorithmus (86) auszuführen, um ein Statussignal an eine Benutzerschnittstelle (84) zu kommunizieren, um den Status des ersten Satzes von Messern (60) und den Status des zweiten Satzes von Messern (62) zu kommunizieren.

7. Vorschneideranordnung (40) nach mindestens einem der vorhergehenden Ansprüche, wobei der Prozessor (80) dazu betreibbar ist, den Messersteueralgorithmus (86) auszuführen, um den Status des ersten Satzes von Messern (60) zu bestimmen, indem eine aktuelle Position des ersten Satzes von Messern (60) als eine aus der eingezogenen Position des ersten Satzes von Messern (60) oder der ausgefahrenen Position des ersten Satzes von Messern (60) bestimmt wird, und den Status des zweiten Satzes von Messern (62) zu bestimmen, indem eine aktuelle Position des zweiten Satzes von Messern (62) als eine aus der eingezogenen Position des zweiten Satzes von Messern (62) oder der ausgefahrenen Position des zweiten Satzes von Messern (62) bestimmt wird.

8. Vorschneideranordnung (40) nach mindestens einem der vorhergehenden Ansprüche, wobei der Prozessor (80) dazu betreibbar ist, den Messersteueralgorithmus (86) auszuführen, um ein Positionssignal an eine Benutzerschnittstelle (84) zu kommunizieren, um die aktuelle Position des ersten Satzes von Messern (60) und die aktuelle Position des zweiten Satzes von Messern (62) zu kommunizieren.

9. Vorschneideranordnung (40) nach mindestens einem der vorhergehenden Ansprüche, wobei der Prozessor (80) dazu betreibbar ist, den Messersteueralgorithmus (86) auszuführen, um Daten zu empfangen, die sich auf ein aktuelles Gewicht eines Ballens und/oder eine aktuelle Größe eines Ballens und/oder einen aktuellen Ernteguttyp eines Ballens und/oder eine gewünschte Dichte des Ballens beziehen.

10. Vorschneideranordnung (40) nach mindestens einem der vorhergehenden Ansprüche, ferner umfassend einen Positionssensor (76), der in Kommunikation mit der Steuerung (78) angeordnet und positioniert ist, um Daten zu erfassen, die sich auf eine aktuelle Position des ersten Satzes von Messern (60) und eine aktuelle Position des zweiten Satzes von Messern (62) beziehen.

11. Vorschneideranordnung (40) nach mindestens einem der vorhergehenden Ansprüche, wobei der Prozessor (80) dazu betreibbar ist, den Messersteueralgorithmus (86) auszuführen, um eine Betätigung eines Überlastschutzsystems (52) von einem aus dem ersten Satz von Messern (60) und dem zweiten Satz von Messern (62) zu detektieren.

12. Vorschneideranordnung (40) nach Anspruch 11, wobei der Prozessor (80) dazu betreibbar ist, den Messersteueralgorithmus (86) auszuführen, um als Reaktion auf eine Betätigung des Überlastschutzsystems (52) automatisch entweder den ersten Satz von Messern (60) oder den zweiten Satz von Messern (62) zurückzusetzen.

13. Ballenpressengerät, umfassend eine Vorschneideranordnung (40) nach mindestens einem der Ansprüche 1 bis 12.

14. Ballenpressengerät nach Anspruch 13, wobei das Ballenpressengerät Folgendes umfasst:
einen Rahmen mit einer damit gekoppelten Bodeneingriffsvorrichtung zum Durchqueren einer Bodenoberfläche;
ein Ballenbildungssystem, das an dem Rahmen angebracht ist und eine Verdichtungskammer beinhaltet, die dazu betreibbar ist, Erntegutmaterial zu einem Ballen zu formen, wobei die Verdichtungskammer einen Einlass zum Aufnehmen des Erntegutmaterials dort hindurch beinhaltet;
eine Pickup, die an dem Rahmen angebracht ist und vor dem Ballenbildungssystem relativ zu einer Bewegungsrichtung während des Betriebs positioniert ist und dazu betreibbar ist, das Erntegutmaterial zu sammeln und das Erntegutmaterial durch den Einlass und in die Verdichtungskammer zu fördern;
die Vorschneideranordnung, die am Rahmen befestigt ist und zwischen der Pickup und dem Einlass der Verdichtungskammer positioniert ist.

## Revendications

1. Ensemble pré-coupeur (40) pour un outil de presse à balles (20), l'ensemble pré-coupeur (40) comprenant :
une structure de support (42) ;
une pluralité de couteaux (44) comprenant un premier jeu de couteaux (60) et un second jeu de couteaux (62), le premier jeu de couteaux (60) et le second jeu de couteaux (62) étant chacun déplaçables indépendamment l'un de l'autre par rapport à la structure de support (42) entre une position rétractée et une position déployée ;
un premier actionneur (68) couplé au premier jeu de couteaux (60) et utilisable pour déplacer le premier jeu de couteaux (60) entre sa position rétractée respective et sa position déployée respective ;
un second actionneur (72) couplé au second jeu de couteaux (62) et utilisable pour déplacer le second jeu de couteaux (62) entre sa position rétractée respective et sa position déployée respective ;
un dispositif de commande (78) couplé fonctionnellement au premier actionneur (68) et au second actionneur (72),
le dispositif de commande (78) comprenant un processeur (80) et une mémoire (82) ayant stocké un algorithme de commande de couteau (86) sur celui-ci, le processeur (80) étant utilisable pour exécuter l'algorithme de commande de couteau (86) afin de :
déterminer un paramètre de fonctionnement actuel de la presse à balles ;
déterminer un état du premier jeu de couteaux (60) et un état du second jeu de couteaux (62) ;
définir un réglage de position souhaité pour le premier jeu de couteaux (60) afin d'inclure l'une de la position rétractée du premier jeu de couteaux (60) et de la position déployée du premier jeu de couteaux (60), sur la base du paramètre de fonctionnement actuel de la presse à balles, de l'état du premier jeu de couteaux (60) et de l'état du second jeu de couteaux (62) ;
définir un réglage de position souhaité pour le second jeu de couteaux (62) afin d'inclure l'une de la position rétractée du second jeu de couteaux (62) et de la position déployée du second jeu de couteaux (62), sur la base du paramètre de fonctionnement actuel de la presse à balles, de l'état du premier jeu de couteaux (60) et de l'état du second jeu de couteaux (62) ; et
communiquer un signal de commande au premier actionneur (68) et au second actionneur (72) pour commander le premier actionneur (68) afin de positionner le premier jeu de couteaux (60) dans le réglage de position souhaité pour le premier jeu de couteaux (60) et commander le second actionneur (72) afin de positionner le second jeu de couteaux (62) dans le réglage de position souhaité pour le second jeu de couteaux (62),
**caractérisé en ce que**
le processeur (80) est utilisable pour exécuter l'algorithme de commande de couteau (86) afin de déterminer l'état du premier jeu de couteaux (60) en suivant une utilisation cumulative du premier jeu de couteaux (60) dans le temps, et pour déterminer l'état du second jeu de couteaux (62) en suivant une utilisation cumulative du second jeu de couteaux (62) sur une certaine période de temps.

2. Ensemble pré-coupeur (40) selon la revendication 1, le processeur (80) étant utilisable pour exécuter l'algorithme de commande de couteau (86) afin de déterminer le paramètre de fonctionnement actuel de la presse à balles en déterminant l'un des paramètres suivants : un type de récolte actuel, un débit de récolte actuel, une densité de balle souhaitée et une densité de balle actuelle.

3. Ensemble pré-coupeur (40) selon au moins l'une des revendications précédentes, le processeur (80) étant utilisable pour exécuter l'algorithme de commande de couteau (86) afin de définir le réglage de position souhaité pour le premier jeu de couteaux (60) et le réglage de position souhaité pour le second jeu de couteaux (62) sur la base de celui parmi l'utilisation cumulative du premier jeu de couteaux (60) et l'utilisation cumulative du second jeu de couteaux (62) qui est moindre.

4. Ensemble pré-coupeur (40) selon au moins l'une des revendications précédentes, le processeur (80) étant utilisable pour exécuter l'algorithme de commande de couteau (86) afin de déterminer l'état du premier jeu de couteaux (60) en déterminant un affûtage actuel du premier jeu de couteaux (60), et pour déterminer l'état du second jeu de couteaux (62) en déterminant un affûtage actuel du second jeu de couteaux (62).

5. Ensemble pré-coupeur (40) selon la revendication 4, le processeur (80) étant utilisable pour exécuter l'algorithme de commande de couteau (86) afin de définir le réglage de position souhaité pour le premier jeu de couteaux (60) et le réglage de position souhaité pour le second jeu de couteaux (62) sur la base de celui parmi l'affûtage actuel du premier jeu de couteaux (60) et l'affûtage actuel du second jeu de couteaux (62) qui est plus grand.

6. Ensemble pré-coupeur (40) selon au moins l'une des revendications précédentes, le processeur (80) étant utilisable pour exécuter l'algorithme de commande de couteau (86) afin de communiquer un signal d'état à une interface utilisateur (84) pour communiquer l'état du premier jeu de couteaux (60) et l'état du second jeu de couteaux (62).

7. Ensemble pré-coupeur (40) selon au moins l'une des revendications précédentes, le processeur (80) étant utilisable pour exécuter l'algorithme de commande de couteau (86) afin de déterminer l'état du premier jeu de couteaux (60) en déterminant une position actuele du premier jeu de couteaux (60) pour être l'une de la position rétractée du premier jeu de couteaux (60) ou la position déployée du premier jeu de couteaux (60), et déterminer l'état du second jeu de couteaux (62) en déterminant une position actuelle du second jeu de couteaux (62) pour être l'une de la position rétractée du second jeu de couteaux (62) ou de la position déployée du second jeu de couteaux (62).

8. Ensemble pré-coupeur (40) selon au moins l'une des revendications précédentes, le processeur (80) étant utilisable pour exécuter l'algorithme de commande de couteau (86) afin de communiquer un signal de position à une interface utilisateur (84) pour communiquer la position actuelle du premier jeu de couteaux (60) et la position actuelle du second jeu de couteaux (62).

9. Ensemble pré-coupeur (40) selon au moins l'une des revendications précédentes, le processeur (80) étant utilisable pour exécuter l'algorithme de commande de couteau (86) afin de recevoir des données relatives à au moins l'un d'un poids actuel d'une balle, d'une taille actuele d'une balle, d'un type de récolte actuel d'une balle, et d'une densité souhaitée de la balle.

10. Ensemble pré-coupeur (40) selon au moins l'une des revendications précédentes, comprenant en outre un capteur de position (76) disposé en communication avec le dispositif de commande (78) et positionné pour détecter des données relatives à une position actuele du premier jeu de couteaux (60) et à une position actuele du second jeu de couteaux (62).

11. Ensemble pré-coupeur (40) selon au moins l'une des revendications précédentes, le processeur (80) étant utilisable pour exécuter l'algorithme de commande de couteau (86) afin de détecter l'actionnement d'un système de protection contre les surcharges (52) de l'un du premier jeu de couteaux (60) et du second jeu de couteaux (62).

12. Ensemble pré-coupeur (40) selon la revendication 11, le processeur (80) étant utilisable pour exécuter l'algorithme de commande de couteau (86) afin de réinitialiser automatiquement l'un du premier jeu de couteaux (60) et du second jeu de couteaux (62) en réponse à l'actionnement du système de protection contre les surcharges (52).

13. Outil de presse à balles comprenant un ensemble pré-coupeur (40) selon au moins l'une des revendications 1 à 12.

14. Outil de presse à balles selon la revendication 13, l'outil de presse à balles comprenant :
un châssis auquel est couplé un dispositif d'engagement de sol pour traverser une surface de sol ;
un système de formation de balles fixé au châssis et comprenant une chambre de compression utilisable pour former un matériau de récolte en balle, la chambre de compression comprenant une entrée pour recevoir le matériau de récolte à travers celle-ci ;
un ramasseur fixé au châssis et positionné à l'avant du système de formation des balles par rapport à un sens de déplacement pendant le fonctionnement et utilisable pour rassembler le matériau de récolte et transporter le matériau de récolte à travers l'entrée et dans la chambre de compression ;
l'ensemble pré-coupeur fixé au châssis et positionné entre le ramasseur et l'entrée de la chambre de compression.
